# EUROPÄISCHE PATENTSCHRIFT

(11) **EP 0 828 058 B1**
(45) Veröffentlichungstag und Bekanntmachung des Hinweises auf die Patenterteilung: **22.10.2003**
(21) Anmeldenummer: 97114669.1
(22) Anmeldetag: 25.08.1997
(51) Int. Cl.: F01D 25/30

(54) **Kanalstück für den Rauchgaskanal einer Gasturbine**
Exhaust gas channel element for a gas turbine
Elément d'un canal de gaz d'échappement d'une turbine à gaz

(30) Priorität: 05.09.1996 DE 19636107
(43) Veröffentlichungstag der Anmeldung: 11.03.1998
(73) Patentinhaber: SIEMENS AKTIENGESELLSCHAFT, 80333 München (DE)
(72) Erfinder: Schütz, Herbert, Dipl.-Ing., 91080 Uttenreuth (DE); Kraupa, Werner, Dipl.-Ing., 90768 Fürth (DE); Bähr, Siegfried, Dipl.-Ing., 91330 Eggolsheim (DE)

(56) Entgegenhaltungen:
- DE-A- 2 510 611
- US-A- 3 739 872
- US-A- 4 180 141
- US-A- 5 396 760
- US-A- 5 532 439

## Beschreibung

Die Erfindung bezieht sich auf ein Kanalstück für den Rauchgaskanal einer Gasturbine mit einer Anzahl von Schalldämpferkulissen.

Gasturbinen werden in vielen Bereichen zum Antrieb von Generatoren oder von Arbeitsmaschinen eingesetzt. Bei ihnen wird der Energieinhalt eines Brennstoffs zur Erzeugung einer Rotationsbewegung der Turbinenwelle genutzt. Das bei der Verbrennung des Brennstoffs entstehende Arbeitsmittel oder heiße Gas wird dazu in der Gasturbine entspannt und sodann als Abgas oder Rauchgas einem an die Gasturbine angeschlossenen Rauchgaskanal zugeführt.

Zur Steigerung des Gesamtwirkungsgrades kann der Gasturbine im Rauchgaskanal ein Abhitzedampferzeuger nachgeschaltet sein, in dem der im Rauchgas als Wärme verbliebene Energieinhalt des Brennstoffs zum Verdampfen eines in einem Wasser-Dampf-Kreislauf einer Dampfturbine geführten Arbeitsmediums genutzt wird. Eine derartig kombinierte Anlage zur Erzeugung elektrischer Energie wird auch als Gas- und Dampfturbinenanlage (GuD-Anlage) bezeichnet.

Der Rauchgaskanal der Gasturbine umfaßt üblicherweise mehrere miteinander verbundene Komponenten oder Kanalstücke. Je nach Auslegung und Einsatzort der Gasturbine sind als Komponenten ein Diffusor, ein Abgaskanal mit oder ohne Bypasskamin und weitere Elemente, wie z.B. eine Gasweiche und ein Abhitzekessel, vorgesehen.

Jede Komponente des Rauchgaskanals wird beim Betrieb der Gasturbine üblicherweise durch das die Komponente durchströmende Abgas oder Rauchgas aufgeheizt. Daher ist üblicherweise eine Wärmeisolierung der Komponenten des Rauchgaskanals vorgesehen. Es kann sich dabei um eine Außenisolierung handeln, bei der Isolierelemente im Außenbereich der jeweiligen Komponente angeordnet sind. Alternativ kann eine Innenisolierung vorgesehen sein, bei der Isolierelemente im Innenbereich der jeweiligen Komponente angeordnet sind.

Bei der Auslegung einer Gasturbinenanlage, insbesondere einer Gas- und Dampfturbinenanlage, sind Anforderungen an die Schalldämpfung zu berücksichtigen. Es kann beispielsweise gefordert sein, daß ein Gesamt-Schalleistungspegel gemäß ISO 3746 des gesamten Rauchgaskanals der Gasturbine von 90 dB(A) nicht überschritten werden darf. Weiterhin kann beispielsweise gefordert sein, daß in einem Abstand von etwa einem Meter von Komponenten des Rauchgaskanals ein mittlerer Schalldruckpegel von 85 dB(A) und in einem Abstand von 120 m von den äußeren Grenzen der Gesamtanlage ein Schalldruckpegel von 55 dB(A) nicht überschritten werden soll. Um derartige Schallanforderungen zu erfüllen, sind im Rauchgaskanal der Gasturbine üblicherweise eine Anzahl von Schalldämpferkulissen vorgesehen. Bei einer Gas- und Dampfturbinenanlage, deren Rauchgaskanal einen Bypaßkamin umfaßt, ist dabei üblicherweise ein erster Satz von Schalldämpferkulissen nach dem Abhitzekessel und ein zweiter Satz von Schalldämpferkulissen im Bypaßkamin angeordnet. Eine derartige Bauweise ist insbesondere bei stehend angeordnetem, außenisoliertem Abhitzekessel üblich. Ein Gasturbinen-Abhitzekessel, in dem eine Anzahl von Schalldämpfern angeordnet ist, ist beispielsweise aus den Dokumenten US-A- 3 739 872, US-A-5 532 439, DE-A -2 510 611 und DE 28 55 219 A1 bekannt.

Zur Steigerung des Wirkungsgrades einer Gas- und Dampfturbinenanlage ist es beispielsweise möglich, die Verbrennungstemperatur in der Gasturbine und somit auch das Temperaturniveau im gesamten der Gasturbine nachgeschalteten Rauchgaskanal zu erhöhen. Aus materialtechnischen Gründen ist es dabei jedoch erforderlich, hauptsächlich innenisolierte Komponenten für den Rauchgaskanal, insbesondere einen innenisolierten Abhitzekessel und einen innenisolierten Diffusor, vorzusehen. Eine ausreichende Schalldämpfung dieser innenisolierten Komponenten, insbesondere im Hinblick auf mögliche Schallanforderungen, ist jedoch aufwendig. Üblicherweise ist dazu zusätzlich zu den im Bypaßkamin und nach dem Abhitzekessel ohnehin vorgesehenen Schalldämpferkulissen eine Ummantelung oder Einhausung von Komponenten vorgesehen. Eine derartige Bauweise und besonders die Ummantelung des Abhitzekessels ist nur mit hohem Material- und Isolationsaufwand möglich und somit unwirtschaftlich.

Der Erfindung liegt daher die Aufgabe zugrunde, den Rauchgaskanal einer Gasturbine derart weiterzubilden, daß in einfacher und wirtschaftlicher Weise ein hohes Maß an Schalldämpfung auch bei der Verwendung innenisolierter Komponenten gewährleistet ist. Dazu soll ein besonders geeignetes Kanalstück für den Rauchgaskanal angegeben werden.

Bezüglich des Kanalstücks für den Rauchgaskanal einer Gasturbine wird diese Aufgabe erfindungsgemäß gelöst, indem eine Anzahl von Schalldämpferkulissen vorgesehen ist, von denen mindestens einer rauchgasseitig eine Verdrängernase vorgeschaltet ist, die im horizontalen Querschnitt in Strömungsrichtung des Rauchgases tropfen förmig ausgebildet ist.

Die Erfindung geht dabei von der Überlegung aus, daß bei einem besonders einfachen und zuverlässigen Konzept für die Schalldämpfung des Rauchgaskanals der Gasturbine auch bei der Verwendung innenisolierter Komponenten auf eine Ummantelung oder Einhausung von Komponenten zur Schallisolierung verzichtet werden sollte. Dies ist möglich, indem eine Anzahl von Schalldämpferkulissen möglichst nahe am Entstehungsort des Schalls, also nahe der Gasturbine, vorgesehen ist. Dazu kommt insbesondere in Betracht, das Kesseleintritt-Kanalstück mit seinem großen Querschnitt mit einer Anzahl von Schalldämpferkulissen als "heißen Schalldämpfer" nahe am Ausströmbereich der Gasturbine und vor einer Verzweigungsstelle des Rauchgaskanals in einen Bypaßkamin und in einen Abhitzekessel vorzusehen. In einem derartigen Raumbereich liegt jedoch einerseits ein besonders hohes Temperaturniveau des Rauchgases vor. Andererseits tritt in diesem Raumbereich ein besonders unregelmäßiges Strömungsprofil des den Rauchgaskanal durchströmenden Rauchgases mit örtlich besonders hohen Strömungsgeschwindigkeiten auf. Daraus kann eine zu hohe mechanische Belastung der dort angeordneten Schalldämpferkulissen und somit ihre Beschädigung resultieren. Um dies sicher zu vermeiden, sollten das Strömungsprofil des Rauchgases in geeigneter Weise homogenisiert und die Spitzengeschwindigkeiten herabgesetzt werden. Dies ist erreichbar durch die den Schalldämpferkulissen vorgeschalteten Verdrängernasen, die die Strömung des Rauchgases vor dessen Auftreffen auf die Schalldämpferkulissen umlenken, im Raum verteilen und verlangsamen.

Die Formgebung der Verdrängernasen ist dabei ausgerichtet an ihrer Wirkung auf das Strömungsprofil. Um ein besonders gleichmäßiges Strömungsprofil des Rauchgases im Bereich der Schalldämpferkulissen sicherzustellen, ist die oder jede Verdrängernase im Querschnitt tropfenförmig ausgebildet.

In vorteilhafter Ausgestaltung weist das Kanalstück eine Mehrzahl von in Strömungsrichtung des Rauchgases nebeneinander angeordneten senkrechten Schalldämpferkulissen auf, denen jeweils eine Verdrängernase derart vorgeschaltet ist, daß die Längenausdehnung oder Größe der Verdrängernasen zur Mitte des Rauchgaskanals hin zunimmt. Damit ist eine zunehmende Raumfüllung der Verdrängernasen zur Mitte des Rauchgaskanals hin erreicht. Dieser Ausgestaltung liegt die Erkenntnis zugrunde, daß sich im Rauchgaskanal üblicherweise ein Strömungsprofil des Rauchgases derart einstellt, daß die maximale Strömungsgeschwindigkeit im mittleren Bereich des Rauchgaskanals und die minimale Strömungsgeschwindigkeit im Randbereich des Rauchgaskanals auftreten. Für eine Vergleichmäßigung der Strömungsgeschwindigkeiten über annähernd den gesamten Querschnitt des Rauchgaskanals ist daher eine maximale Verdrängerwirkung im Mittenbereich des Rauchgaskanals vorteilhaft.

Bezüglich des Rauchgaskanals für eine Gasturbine wird die genannte Aufgabe erfindungsgemäß gelöst mit einem Schalldämpfermodul, das als Kanalstück in der beschriebenen Art ausgebildet ist. Durch den Einsatz eines derartigen Kanalstücks ist eine ausreichende Schalldämpfung auch ohne eine Anordnung von Schalldämpferkulissen im Bypaßkamin oder im Abhitzekessel möglich.

In besonders vorteilhafter Ausgestaltung umfaßt ein derartiger Rauchgaskanal zusätzlich zu dem Schalldämpfermodul ein diesem rauchgasseitig nachgeschaltetes Gasweichenmodul mit einem verschiebbaren Absperrschieber, der eine erste Absperrplatte und eine im wesentlichen senkrecht dazu ausgerichtete zweite Absperrplatte umfaßt. Durch ein derartiges Gasweichenmodul ist mit besonders einfachen Mitteln eine zuverlässige Umschaltung zwischen Kesselbetrieb, bei dem das Rauchgas durch den Abhitzekessel geleitet wird, und Bypaßbetrieb, bei dem das Rauchgas durch den Bypaßkamin geleitet wird, ermöglicht.

In vorteilhafter Weiterbildung ist der Absperrschieber dabei, zweckmäßigerweise mittels eines Kettenantriebs, in im wesentlichen vertikaler Richtung verschiebbar. Bei einer derartigen Anordnung können alle zum Antrieb des Absperrschiebers vorgesehenen Krafteinwirkungspunkte und Antriebsmechanismen im kalten Bereich außerhalb des Rauchgaskanals angeordnet sein.

Das Gasweichenmodul weist somit eine besonders geringe Störanfälligkeit und eine lange Lebensdauer auf.

Zweckmäßigerweise ist der Absperrschieber kühlbar. Dazu weist die erste Absperrplatte vorteilhafterweise eine Anzahl von Kühlkanälen auf.

Zweckmäßigerweise ist eine Gasturbine, der rauchgasseitig ein derartiger Rauchgaskanal nachgeschaltet ist, Teil einer Gasund Dampfturbinenanlage.

Die mit der Erfindung erzielten Vorteile bestehen insbesondere darin, daß durch die den Schalldämpferkulissen vorgeschalteten Verdrängernasen eine gleichmäßige Anströmung der Schalldämpferkulissen durch das heiße Rauchgas mit ausreichend geringer Strömungsgeschwindigkeit sichergestellt ist. Zudem ist im Rauchgasbereich hinter den Verdrängernasen eine gleichmäßige, den ganzen Strömungsquerschnitt des Rauchgaskanals ausfüllende Abgasströmung gewährleistet. Somit ist die mechanische und thermische Beanspruchung der den Verdrängernasen nachgeschalteten Schalldämpferkulissen im Vergleich zu dem Rauchgas unmittelbar ausgesetzten Schalldämpferkulissen deutlich herabgesetzt. Die Schalldämpferkulissen weisen somit eine besonders lange Lebensdauer auf. Gerade durch die derart erhöhte Lebensdauer ist der Einsatz eines "heißen Schalldämpfers" im Rauchgasbereich nahe hinter der Gasturbine oder nahe hinter dem Diffusor möglich. Somit kann auf ein aufwendiges Schallschutzkonzept mit einer Ummantelung des Abhitzekessels verzichtet werden.

Es hat sich zudem herausgestellt, daß der Druckverlust des Rauchgases im Rauchgaskanal durch die Vorschaltung der Verdrängernasen herabgesetzt wird. Dies hat zusätzlich zu den günstigen Auswirkungen auf die Lebensdauer der Schalldämpferkulissen auch eine Erhöhung des Wirkungsgrades einer derartigen Gas- und Dampfturbinenanlage zur Folge.

In Kombination mit dem besonders wenig störanfälligen Gasweichenmodul weisen ein derartiger Rauchgaskanal und somit auch eine Gas- und Dampfturbinenanlage mit einem derartigen Rauchgaskanal eine besonders hohe Zuverlässigkeit und eine lange Lebensdauer auf.

Ein Ausführungsbeispiel der Erfindung wird anhand einer Zeichnung näher erläutert. Darin zeigen:
- Fig. 1: schematisch in einer Seitenansicht eine Gas- und Dampfturbinenanlage mit einem von einer Gasturbine ausgehenden Rauchgaskanal,
- Fig. 2: in Aufsicht einen Ausschnitt aus dem Rauchgaskanal der Gas- und Dampfturbinenanlage gemäß Fig. 1 und
- Fig. 3: einen Absperrschieber für ein Gasweichenmodul.

Einander entsprechende Teile sind in allen Figuren mit denselben Bezugszeichen versehen.

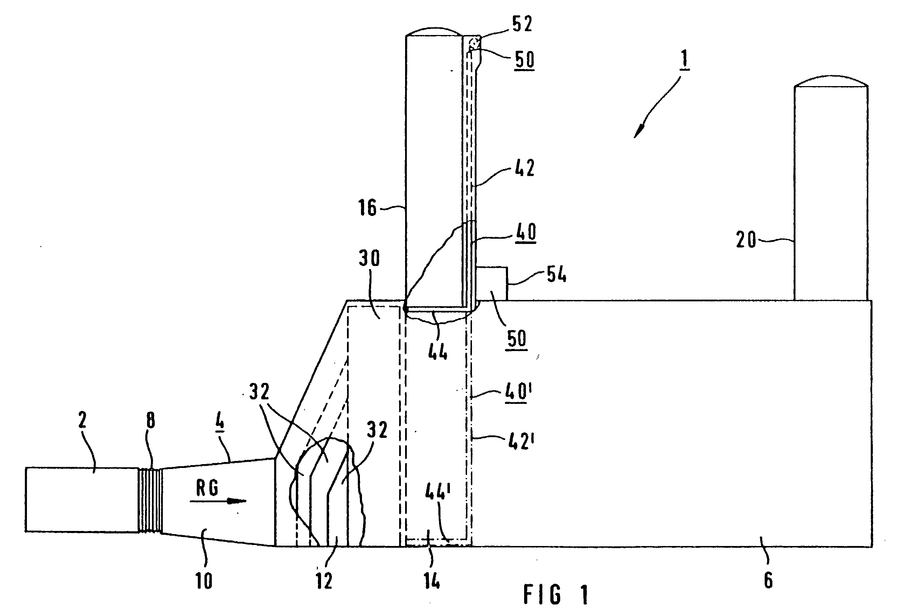

Die Gas- und Dampfturbinenanlage 1 gemäß Fig. 1 umfaßt eine Gasturbine 2, der über einen Rauchgaskanal 4 ein Abhitzekessel 6 zur Dampferzeugung für eine (nicht dargestellte) Dampfturbine nachgeschaltet ist. Der Rauchgaskanal 4 umfaßt als Komponenten oder Kanalstücke einen Metallkompensator 8, einen Diffusor 10, ein Kanalstück 12, ein Gasweichenmodul 14 und einen Bypaßkamin 16. Dem liegend angeordneten innenisolierten Abhitzekessel 6 ist ein Kamin 20 nachgeschaltet.

Zur Schalldämpfung während des Betriebs der Gas- und Dampfturbinenanlage 1 weist das Kanalstück 12 in der Art eines Schalldämpfermoduls eine Anzahl von Schalldämpferkulissen 30 auf, von denen jeder eine Verdrängernase 32 vorgeschaltet ist. Die Schalldämpferkulissen 30 sind dabei stehend in Strömungsrichtung des Rauchgases RG nebeneinander angeordnet. Weitere Schalldämpferkulissen, beispielsweise im Bereich des Bypaßkamins 16 oder im Bereich des Abhitzekessels 6, sind gemäß dem Ausführungsbeispiel nicht vorgesehen. Die Schalldämpferkulissen 30 sind in der Art herkömmlicher Schalldämpferkulissen stehend ausgeführt, wobei ein zur Schalldämpfung vorgesehenes Gewebematerial von einer mit Löchern versehenen metallischen Außenhaut umgeben ist. Die Verdrängernasen 32 hingegen bestehen gemäß dem Ausführungsbeispiel aus einer Stahlkonstruktion.

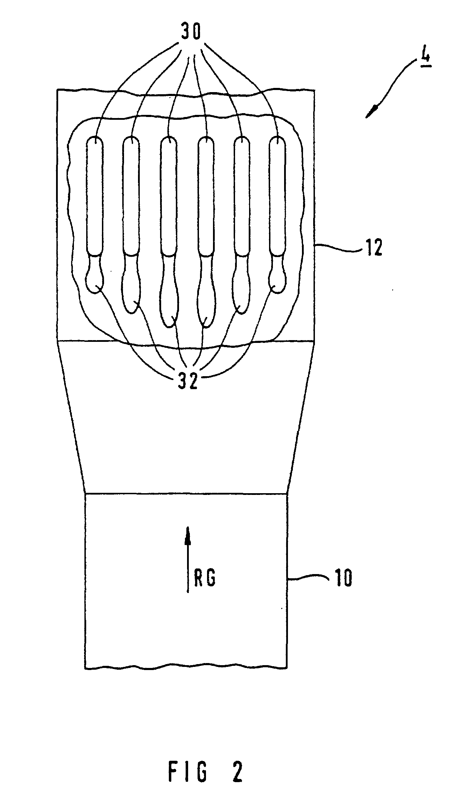

Die Verdrängernasen 32 sind konzipiert zur Einstellung eines gleichmäßigen Strömungsprofils des den Rauchgaskanal 4 durchströmenden heißen Rauchgases RG der Gasturbine 2 im Bereich der Schalldämpferkulissen 30. Dazu ist, wie in Figur 2 in Aufsicht dargestellt, jede Verdrängernase 32 im Querschnitt etwa tropfenförmig ausgebildet. Zudem nimmt die Längenausdehnung von Verdrängernase 32 zu Verdrängernase 32 zur Mitte des Rauchgaskanals 4 hin zu.

Nach Figur 2 sind die Verdrängernasen 32 in einem Bereich sich aufweitenden Strömungsquerschnitts des Rauchgaskanals 4 angeordnet, wie z.B. in dem dafür besonders geeigneten Kesseleintrittskanal.

In einem derartigen Bereich neigt das den Rauchgaskanal 4 durchströmende Rauchgas RG zur Wirbelbildung, die durch die Verdrängernasen 32 ebenfalls reduziert wird. Somit ist der Druckverlust im als Schalldämpfermodul 12 ausgebildeten Kanalstück besonders gering.

Wie in Figur 1 weiter dargestellt, ist das als Schalldämpfermodul vorgesehene Kanalstück 12 in Strömungsrichtung des Rauchgases RG vor dem Gasweichenmodul 14 angeordnet. Das Gasweichenmodul 14, auf das der Bypasskamin 16 aufgesetzt ist, umfaßt einen in vertikaler oder senkrechter Richtung verschiebbaren Absperrschieber 40, der eine erste Absperrplatte 42 und eine zweite Absperrplatte 44 umfaßt. Die zweite Absperrplatte 44, jeweils in der Art eines L-förmigen Querschnittsprofils, ist dabei im wesentlichen senkrecht zur ersten Absperrplatte 42 ausgerichtet. Durch eine Verschiebung des Absperrschiebers 40 ist eine Umschaltung zwischen zwei Betriebszuständen der Gas- und Dampfturbinenanlage 1, nämlich zwischen dem Kesselbetrieb und dem Bypassbetrieb, möglich. Beim Kesselbetrieb, bei dem das Rauchgas RG der Gasturbine 2 durch den Abhitzekessel 6 geleitet wird, befindet sich der Absperrschieber 40 in angehobener Position. Dabei verschließt die zweite Absperrplatte 44 den Bypasskamin 16 eingangsseitig, wogegen der Abhitzekessel 6 eingangsseitig geöffnet ist. Im Bypassbetrieb hingegen wird das Rauchgas RG der Gasturbine 2 unter Vermeidung des Abhitzekessels 6 über den Bypasskamin 16 abgeleitet. Dazu befindet sich im Bypassbetrieb der in diesem Fall mit 40' bezeichnete Absperrschieber in abgesenkter Position, so daß die zweite Absperrplatte 44 bodenseitig aufliegt und die erste Absperrplatte 42 den Abhitzekessel 6 eingangsseitig verschließt. Die zweite Absperrplatte 44 leitet dabei die Strömungsrichtung des Rauchgases RG zum Bypasskamin 16 hin um.

Für eine Umschaltung zwischen Bypassbetrieb und Kesselbetrieb (Open bzw. Closed Cycle) ist der Absperrschieber 40 in vertikaler Richtung verschiebbar. Um ein Verkanten des Absperrschiebers 40 dabei sicher zu vermeiden, weist dieser ein Längen-Breiten-Verhältnis von etwa 4:1 auf. Zum Anheben des Absperrschiebers 40 ist ein Kettenantrieb 50 vorgesehen, der eine an der ersten Absperrplatte 42 befestigte, über eine Umlenkrolle 52 geführte und mit einer Antriebseinheit 54 verbundene, nicht näher dargestellte Antriebskette umfaßt. Zum Absenken des Absperrschiebers 40 ist die auf diesen einwirkende Schwerkraft ausreichend, wobei der Kettenantrieb 50 zum Abbremsen einsetzbar ist.

Die zum Umschalten des Gasweichenmoduls 14 erforderlichen Elemente und Antriebseinheiten sind somit allesamt im kalten Bereich außerhalb des Rauchgaskanals 4 und des Abhitzekessels 6 angeordnet. Diese Elemente sind einer deutlich geringeren thermischen Beanspruchung ausgesetzt als im heißen Innenbereich des Rauchgaskanals 4 angeordnete Elemente. Daher weist das Gasweichenmodul 14 eine besonders lange Lebensdauer auf.

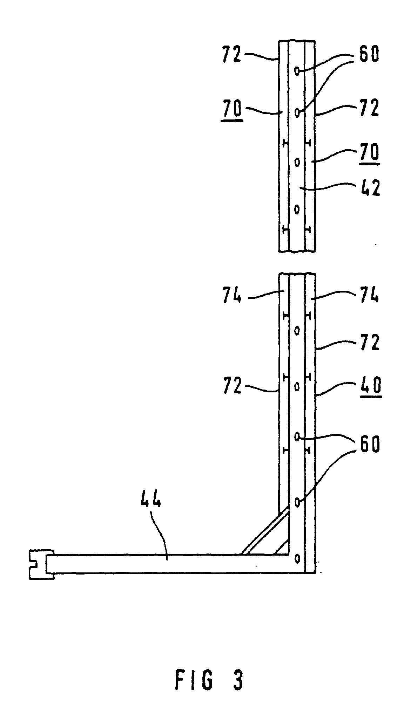

Wie in Figur 3 dargestellt, weisen die Absperrplatten 42 und 44 des Absperrschiebers 40 eine Anzahl von Kühlluftkanälen auf, die jeweils in einen Kühlluftauslaß 60 münden. Die Dimensionierung ist dabei derart, daß die tragende Struktur des Absperrschiebers 40 in jedem Betriebszustand eine Temperatur von maximal etwa 100° C aufweist. Somit ist in jedem Betriebszustand der Gas- und Dampfturbinenanlage 1 gewährleistet, daß der Absperrschieber 40 verzugsfrei bleibt. Um neben einer für eine Kühlung ausreichenden Luftmenge auch eine erforderliche Durchströmungsgeschwindigkeit der Kühlluft durch den Absperrschieber 40 sicher einzuhalten, ist der Absperrschieber 40 in seinem Querschnitt in Strömungskanäle derart unterteilt, daß die Strömungskanäle in Randnähe von der Kühlluft zuletzt durchströmt werden, bevor die Kühlluft über die Austrittsöffnungen 60 einem geschlossenen Dichtungssystem zugeführt wird.

Die Absperrplatten 42 und 44 des Absperrschiebers 40 sind beidseitig mit einer wärmeisolierenden Beplankung 70 versehen. Die Beplankung 70 umfaßt dabei eine Anzahl von Abdeckblechen 72 aus hitzebeständigem Chromstahl, die in der Art von Rolladengliedern an ihren Langseiten mit einer darunterliegenden Tragkonstruktion verhakt sind. Die Fugen zwischen jeweils zwei Abdeckblechen 72 sind dabei derart dimensioniert, daß die Abdeckbleche 72 auch bei einer Temperaturbeanspruchung von bis zu etwa 600° C eben bleiben. Unterhalb der Abdeckbleche 72 ist eine Isolierschicht 74 aus Isoliergewebepolstern vorgesehen. Im Ausführungsbeispiel sind Isoliergewebepolster aus Isolierwolle, insbesondere aus Mineralfaser, vorgesehen, die in dicht gewebte temperaturbeständige Matten eingenäht ist.

Für eine kontrollierbare Verschiebbarkeit ist der Absperrschieber 40 durch Führungsrohre, eingeschweißt in seitliche Randkanäle, geführt. Durch diese dringt Kühlluft oder Sperrluft aus dem jeweiligen Randkanal in die Führungsschiene ein. Die Führungsrohre weisen dabei ferritische Führungssteine auf. Die ferritischen Führungssteine greifen in austenitische Führungsschienen ein, die aus H-förmigen Teilstücken zusammengesetzt und über IT-Auflagen an ein Traggerüst angeschraubt sind.

Der Rauchgaskanal 4 mit dem Schalldämpfermodul 12 und dem diesem nachgeschalteten Gasweichenmodul 14 zeichnet sich durch eine besonders lange Lebensdauer seiner Komponenten aus. Zudem ist aufgrund der Anordnung der Schalldämpferkulissen 30 in der Art eines "heißen Schalldämpfers" im als Schalldämpfermodul vorgesehenen Kanalstück 12 mit einfachen Mitteln eine besonders wirkungsvolle Schalldämpfung erreicht. Daher kann auf eine aufwendige Ummantelung oder Einhausung des Abhitzekessels 6 zum Zweck der Schalldämpfung verzichtet werden.

Aufgrund der den Schalldämpferkulissen 30 vorgeschalteten Verdrängernasen 32 ist zudem der Druckverlust im Kanalstück 12 besonders gering. Die durch die Verdrängernasen 32 vergleichmäßigte, geringe Anströmgeschwindigkeit des Rauchgases RG im Bereich der Schalldämpferkulissen 30 gewährleistet eine besonders lange Lebensdauer der Schalldämpferkulissen 30.

Der Bypasskamin 16 kann wegen der Schalldämpfung im Kanalstück 12 - ebenso wie der Kamin 20 - ohne eigene Schalldämpferkulissen ausgeführt sein. Dies wiederum erlaubt die baulich vereinfachte Ausführung der Gasweiche als Gasweichenmodul 14 mit dem Absperrschieber 40. Auch das Gasweichenmodul 14 weist eine besonders lange Lebensdauer auf, da alle zur Umschaltung des Betriebszustandes des Rauchgaskanals 4 notwendigen Antriebsaggregate im kalten Außenbereich des Rauchgaskanals 4 angeordnet sind.

## Patentansprüche

1. Kanalstück (12) mit einer Anzahl von Schalldämpferkulissen (30) für den Rauchgaskanal (4) einer Gasturbine (2), wobei mindestens einer Schalldämpferkulisse (30) rauchgasseitig eine Verdrängernase (32) vorgeschaltet ist,
**dadurch gekennzeichnet, dass** die oder jede Verdrängernase (32) im horizontalen Querschnitt in Strömungsrichtung des Rauchgases (RG) tropfenförmig ausgebildet ist.

2. Kanalstück (12) nach Anspruch 1,
**dadurch gekennzeichnet, dass** einer Mehrzahl von in Strömungsrichtung des Rauchgases (RG) nebeneinander angeordneten Schalldämpferkulissen (30) jeweils eine Verdrängernase (32) vorgeschaltet ist, wobei die Längenausdehnung der Verdrängernasen (32) zur Mitte des Rauchgaskanals (4) hin zunimmt.

3. Rauchgaskanal (4) für eine Gasturbine (2) mit einem Schalldämpfermodul, das als Kanalstück (12) nach einem der Ansprüche 1 bis 2 ausgebildet ist.

4. Rauchgaskanal (4) nach Anspruch 3,
**dadurch gekennzeichnet, dass** das Schalldämpfermodul in Strömungsrichtung des Rauchgases (RG) vor einem Gasweichenmodul (14) mit einem verschiebbaren Sperrschieber (40) angeordnet ist, der eine erste Absperrplatte (42) und eine im wesentlichen senkrecht dazu ausgerichtete zweite Absperrplatte (44) umfasst.

5. Rauchgaskanal (4) nach Anspruch 4, bei dem der Absperrschieber (40) in im wesentlichen vertikaler Richtung verschiebbar ist.

6. Rauchgaskanal (4) nach Anspruch 4 oder 5, bei dem der Absperrschieber (40) mittels eines Kettenantriebs (50) verschiebbar ist.

7. Rauchgaskanal (4) nach einem der Ansprüche 5 bis 7,
**dadurch gekennzeichnet, dass** die Absperrplatten (42, 44) jeweils eine Anzahl von Kühlkanälen aufweisen.

8. Gas- und Dampfturbinenanlage (1) mit einer Gasturbine (2), der rauchgasseitig ein Rauchgaskanal (4) nach einem der Ansprüche 3 bis 7 nachgeschaltet ist.

## Claims

1. Duct piece (12) having a number of sound-absorber gates (30) for the flue-gas duct (4) of a gas turbine (2), a displacement nose (32) being disposed, on the flue-gas side, upstream of at least one sound-absorber gate (30), **characterised in that** the or each displacement nose (32) is of drop-shaped construction in horizontal cross section in the direction of flow of the flue gas (RG).

2. Duct piece (12) according to Claim 1, **characterised in that** a displacement nose (32) is in each case disposed upstream of a plurality of sound-absorber gates (30) disposed side by side in the direction of flow of the flue gas (RG), the linear extension of the displacement noses (32) increasing towards the centre of the flue-gas duct (4).

3. Flue-gas duct (4) for a gas turbine (2) having a sound-absorber module which is constructed as a duct piece (12) according to one of Claims 1 and 2.

4. Flue-gas duct (4) according to Claim 3, **characterised in that** the sound-absorber module is disposed upstream, in the direction of flow of the flue gas (RG), of a gas-switch module (14) having a displaceable shut-off damper (40) which includes a first shut-off plate (42) and a second shut-off plate (44) oriented substantially perpendicularly thereto.

5. Flue-gas duct (4) according to Claim 4, in which the shut-off damper (40) is displaceable in a substantially vertical direction.

6. Flue-gas duct (4) according to Claim 4 or 5, in which the shut-off damper (40) is displaceable by means of a chain drive (50).

7. Flue-gas duct (4) according to one of Claims 5 to 7, **characterised in that** the shut-off plates (42, 44) each have a number of cooling passages.

8. Gas- and steam-turbine plant (1) having a gas turbine (2), downstream of which, on the flue-gas side, there is disposed a flue-gas duct (4) according to one of Claims 3 to 7.

## Revendications

1. Tronçon (12) de canalisation ayant un certain nombre de coulisses (30) d'amortissement du bruit pour la canalisation (4) des gaz d'échappement d'une turbine (2) à gaz, un bec (32) de refoulement étant monté en amont du côté du gaz d'échappement d'au moins une coulisse (30) d'amortissement du bruit,
**caractérisé en ce que** le bec (32) de refoulement ou chaque bec (32) de refoulement est constitué sous la forme d'une goutte en vue en coupe transversale horizontale dans la direction du courant du gaz (RG) d'échappement.

2. Tronçon (12) de canalisation suivant la revendication 1,
**caractérisé en ce qu'**un bec (32) de refoulement est monté respectivement en amont d'une multiplicité de coulisses (30) d'amortissement du bruit, montées côte à côte dans la direction du courant du gaz (RG) d'échappement, l'étendue longitudinale des bec (32) de refoulement augmentant vers le milieu de la canalisation (4) pour les gaz d'échappement.

3. Canalisation (4) de gaz d'échappement pour une turbine (2) à gaz, comprenant un module d'amortisseur de bruit qui est constitué sous la forme d'un tronçon (12) de canalisation suivant l'une des revendications 1 à 2.

4. Canalisation (4) de gaz d'échappement suivant la revendication 3,
**caractérisée en ce que** le module d'amortissement du bruit est monté en amont dans la direction du courant des gaz (RG) d'échappement d'un module (14) de déviation des gaz ayant un tiroir (40) d'arrêt coulissant, qui comprend une première plaque (42) d'arrêt et une deuxième plaque (44) d'arrêt dirigée sensiblement perpendiculairement à la première plaque.

5. Canalisation (4) de gaz d'échappement suivant la revendication 4, dans laquelle le tiroir (40) d'arrêt coulisse dans une direction sensiblement verticale.

6. Canalisation (4) de gaz d'échappement suivant la revendication 4 ou 5, dans laquelle le tiroir (40) d'arrêt peut coulisser au moyen d'une transmission (50) à chaîne.

7. Canalisation (4) de gaz d'échappement suivant l'une des revendications 5 à 7, **caractérisée en ce que** les plaques (42, 44) d'arrêt ont respectivement un certain nombre de conduits de refroidissement.

8. Installation (1) de turbine à gaz et de turbine à vapeur, comprenant une turbine (2) à gaz en aval de laquelle, du côté des gaz d'échappement, est montée une canalisation (4) de gaz d'échappement suivant l'une des revendications 3 à 7.
